# EUROPÄISCHE PATENTSCHRIFT

(11) **EP 1 356 217 B1**
(45) Veröffentlichungstag und Bekanntmachung des Hinweises auf die Patenterteilung: **29.03.2006**
(21) Anmeldenummer: 02708180.1
(22) Anmeldetag: 28.01.2002
(51) Int. Cl.: F16G 13/16

(54) **FÜHRUNGSRINNE**
GUIDE GROOVE
RIGOLE DE GUIDAGE

(30) Priorität: 30.01.2001 DE 20101656 U
(43) Veröffentlichungstag der Anmeldung: 29.10.2003
(73) Patentinhaber: igus GmbH, 51147 Köln (DE)
(72) Erfinder: HERMEY, Andreas, D-53773 Hennef (DE); SEUBERT, Claus, D-51147 Köln (DE); BLASE, Günter, 51429 Bergisch Gladbach (DE)
(74) Vertreter: Lippert, Stachow & Partner
(86) Internationale Anmeldenummer: PCT/DE2002/000300
(87) Internationale Veröffentlichungsnummer: WO 2002/061305

(56) Entgegenhaltungen:
- DE-C- 19 512 105
- DE-C- 19 730 548
- DE-U- 20 101 656
- DE-U- 29 610 067
- DE-U- 29 706 670

## Beschreibung

Die Erfindung betrifft eine Führungsrinne für Energieführungsketten, wobei die Führungsrinne zueinander parallele seitliche sowie bodenseitige Führungselemente zwischen bzw. auf denen die Energieführungskette ablegbar ist und eine Tragkonstruktion mit Tragelementen aufweist, die die Führungselemente unterstützen und an denen die Führungselemente befestigbar sind, und wobei die Tragelemente mindestens eine sich im Wesentlichen vertikal erstreckende Abstützung für zumindest eines der seitlichen Führungselemente aufweisen.

Gattungsgemäße Führungsrinnen sind für bestimmte Anwendungszwecke vorgesehen, bei welchen die Führungsrinnen an im wesentlichen vertikalen Flächen in Form von Wänden, Trägern oder dergleichen zu befestigen sind. Derartige Verhältnisse sind beispielsweise bei der Verwendung von Energieführungsketten bei Krananlagen gegeben, ohne hierauf beschränkt zu sein, wobei die Energieführungsketten unter Ausbildung eines Ober- und Untertrums sowie eines Umlenkbereichs schlaufenförmig abgelegt wird.

Bisher wurden Führungsrinnen an den vertikalen Flächen befestigt, indem zunächst eine von der Wand bzw. dem Träger seitlich nach außen vorstehende Tragkonstruktion, deren Breite zumindest der der Führungsrinne entspricht, an der vertikalen Fläche befestigt wurde. Anschließend wurde eine herkömmliche Führungsrinne, die bodenseitig an einer Unterkonstruktion befestigbar ist, mittels Schraubverbindungen an der Tragkonstruktion festgelegt. Die Befestigung derartiger Führungsrinnen ist sehr zeit- und arbeitsaufwendig, da sowohl die Tragkonstruktion an der vertikalen Fläche als auch die Führungsrinne an der Tragkonstruktion aufwendig festzuschrauben sind. Des Weiteren müssen sowohl die Tragkonstruktion als auch die Führungsrinne gegenüber dem vorgesehenen Verfahrweg der Energieführungskette ausgerichtet werden.

Die DE-U-297 06 670 beschreibt eine gattungsgemäße Führungsrinne für Energieführungsketten, wobei die als Seitenteile ausgebildeten Führungselemente zumindest in einem Bereich der Führungsrinne an der zur Energieführungskette gerichteten Innenseite Ausbuchtungen mit einer etwa horizontalen Oberseite zur Auflage der Energieführungskette aufweisen und wobei Tragelemente in Form von Verbindungselementen vorgesehen sind, die als im Wesentlichen L-förmige Montagewinkel ausgebildet und an einer Unterkonstruktion befestigt sind.

Die DE-U-296 10 067 beschreibt eine Führungsrinne für Energieführungsketten mit langgestreckten, parallelen Seitenteilen, welche mindestens eine ins Innere der Führungsrinne vorstehende, schräg nach oben gerichtete Auflageschräge aufweisen, auf die ein an einem Zubehörteil ebenfalls schräg vorstehendes Halteelement auflegbar ist und von der Auflageschräge unterstützt das Zubehörteil an dem Seitenteil haltert.

Der Erfindung liegt somit die Aufgabe zugrunde, eine Führungsrinne zu schaffen, die einfach konstruiert ist und mit geringem Montageaufwand an einer vertikalen Fläche befestigbar ist.

Die Aufgabe wird durch eine Führungsrinne nach Anspruch 1 gelöst. Die Tragelemente weisen Befestigungseinrichtungen zur Befestigung derselben und damit der Führungsrinne an einer im Wesentlichen vertikalen Fläche auf. An den Tragelementen und den seitlichen und/oder bodenseitigen Führungselementen sind hierbei korrespondierende Mittel zur vorzugsweise lösbaren Befestigung der Führungselemente einstückig angeformt. Durch die an den Trag- bzw. Führungselementen angeformten Befestigungsmittel ist der Montageaufwand erheblich vereinfacht. Die Befestigungsmittel sind hierbei vorzugsweise derart ausgeführt, dass durch die Montage der Tragelemente bereits die Befestigungsbereiche für die Führungselemente ausgerichtet und deren Lage zu der vertikalen Fläche definiert wird.

Die Tragelemente weisen einen von dem unterhalb der Führungselemente angeordneten Unterstützungsbereich abgewinkelten Befestigungbereich zur Festlegung des Tragelementes an der vertikalen Fläche auf, der sich vorteilhafterweise in Richtung auf die Führungselemente erstreckt und vorzugsweise zugleich eine seitliche Abstützung für das mindestens eine zugeordnete Führungselement bildet. Das Tragelement ist somit vorzugsweise im Wesentlichen L-, Z- oder U-förmig ausgeführt, wobei einer der endständigen Schenkel an der vertikalen Fläche montiert wird.

Die Längserstreckung der Tragelemente in Längsrichtung der Führungsrinne ist vorzugsweise klein gegenüber die Länge der Führungselemente, insbesonders bevorzugt klein gegenüber der Breite der Führungsrinne. Die Länge der Tragelemente kann aber auch im Bereich der Länge der Führungselemente sein oder diese übersteigen. Die Länge der Führungselemente beträgt vorzugsweise ein Vielfaches der Breite der Führungsrinne. Die Breite der Tragelemente entspricht vorzugsweise der der Führungsrinne, so dass die Tragelemente die Führungselemente über deren gesamte Breite unterstützen, die Breite der Tragelemente kann aber auch kleiner sein.

Die Tragelemente können jeweils mittel- oder unmittelbar an der vertikalen Fläche befestigbar sein.

Vorzugsweise weist die Tragkonstruktion eine Mehrzahl, vorzugsweise 3-5 oder mehr, von stirnseitig zueinander angeordneten und voneinander in Längsrichtung der Führungsrinne beabstandeten Tragelementen auf, die jeweils einem Führungselement zugeordnet sind. Die Breite der Tragelemente kann im Wesentlichen der Breite der Befestigungsbereiche, die der vertikalen Fläche zugeordnet sind, betragen oder geringer als diese sein. Die Tragelemente können insbesondere durch Ablängung eines langgestreckten Profils hergestellt sein, wobei nur noch die der vertikalen Fläche zugeordneten Befestigungsbereiche, z. B. in Form von Durchgangs- oder Sackbohrungen, eingeformt werden müssen.

Die Tragelemente sind vorzugsweise einstückig ausgeführt, gegebenenfalls können sie auch mehrteilig sein und beispielsweise separate vertikale Abstützungen aufweisen. Die Befestigungsmittel für die Tragelementteile aneinander sind dann vorzugsweise an diesen einstückig angeformt. Zur Anpassung der Tragelemente an unterschiedliche Abmessungen der Energieführungskette (z.B. Breite und/oder Höhe derselben) und/oder unterschiedliche Neigungen der im Wesentlichen vertikalen Montageflächen können die Tragelemente Einstellmittel zur Veränderung der Abmessungen und/oder Geometrie derselben oder geeignete Adaptereinrichtungen bzw. Paßstücke aufweisen.

Es sei hier verstanden, dass die Befestigungsmittel der Tragelemente mit den Führungselemente und/oder der Tragelementteile untereinander vorzugsweise ausschliesslich aus einstückig an diesen angeformten Befestigungsmitteln bestehen.

Die mindestens eine vertikale Abstützung der Tragelemente für die Führungselemente kann auf der der vertikalen Fläche zu- oder abgewandten Seite der Tragelemente vorgesehen sein, vorzugsweise sind vertikale Abstützungen für die der vertikalen Fläche zu- und abgewandten Führungselemente vorgesehen, die vorzugsweise einstückig an dem Tragelement angeformt sind, ohne hierauf beschränkt zu sein.

Insbesondere bei einem Tragelement mit U-förmigen Profil können die beiden seitlichen Schenkel eine unterschiedliche Höhe aufweisen. Vorzugsweise ist der längere seitliche Schenkel mit Befestigungsmitteln zur Befestigung des Tragelementes an der vertikalen Fläche versehen. Derartige Befestigungsmittel können beispielsweise in Form von Durchgangs- oder Sackbohrungen zur Aufnahme von separaten Befestigungselementen wie Schrauben oder dergleichen ausgeführt sein, wobei auch andere geeignete Befestigungsmittel vorgesehen sein können.

Unabhängig von der Formgebung des Tragelementes kann/können eine oder beide seitlichen Abstützungen derselben für die Führungselemente eine geringer Höhe als die Führungsrinne aufweisen. Die seitlichen Schenkel der Tragelemente werden somit vorzugsweise von den seitlichen Führungselementen der Führungsrinne überragt. Die vertikalen Abstützungen erstrecken sich vorzugsweise über mehr als die halbe, z.B. 2/3 oder mehr der Höhe der Führungselemente.

Die Befestigungsmittel der Führungselemente an den Tragelementen sind vorzugsweise als miteinander korrespondierende Vorsprünge und Ausnehmungen ausgeführt. Die Befestigungsmittel können beispielsweise als Form- und/oder Kraftschlussmittel, insbesondere als Rastmittel, ausgeführt sein, wobei eine Befestigung durch Einschieben der Führungselemente in die Tragelemente erfolgen kann. Die Befestigungsrichtung, in der die Elemente aufeinander zuzuführen sind, kann der Längsrichtung der Führungsrinne oder einer Richtung senkrecht zu dieser entsprechen, ohne hierauf beschränkt zu sein. Gegebenenfalls können die Führungselemente auch durch eine, beispielsweise seitliche, Einschwenkbewegung an den Tragelementen befestigbar sein, wobei die Vorsprünge durch diese Bewegung in die korrespondierenden Ausnehmungen eingeführt und so an den Tragelementen lösbar befestigt werde können. Die Befestigungsmittel können gegebenenfalls auch auf andere geeignete Weise ausgestaltet werden. Die Befestigungsmittel der Trag- und Führungselemente aneinander können gleichzeitig eine verschiebungssichere Festlegung der Führungselemente an den Tragelementen bewirken, es können gegebenenfalls auch separate Verschiebungssicherungsmittel vorgesehen sein.

Vorzugsweise sind die Führungselemente mit außenseitig angeordneten, seitlich und/oder bodenseitig vorstehenden Vorsprüngen versehen, die in korrespondierende Ausnehmungen der Tragelemente eingreifen. Die Vorsprünge können die Länge der Führungselemente aufweisen und so gleichzeitig als Verstärkungsrippen dienen. Die seitliche Erstreckung der Vorsprünge kann im Bereich der halben bis ganzen Wandstärke der Führungselemente oder darüber hinaus betragen, ohne hierauf beschränkt zu sein. Die Befestigungsvorsprünge der Führungselemente können einen im Wesentlichen elliptischen oder ovalen Querschnitt aufweisen. Gegebenenfalls können auch mehrere in Längsrichtung der Führungselemente aufeinanderfolgende Haltevorsprünge an den Führungselementen angeformt sein. Vorzugsweise ist mindestens ein Vorsprung an einem bodenseitigen Bereich, der eine geführte Energieführungskette unterstützt, und mindestens ein Vorsprung an einem seitlichen Führungsbereich der Führungselementes, der eine geführte Energieführungskettte seitlich führt, vorgesehen.

Vorzugsweise erstrecken sich die Führungselemente einteilig in der Höhe und/oder Breite über den gesamten Aufnahmebereich der Führungsrinne für die Energieführungskette, wobei die Führungsrinne jeweils unter- bzw. oberhalb der Energieführungskette angeordnet ist, so dass die Energieführungskette seitlich und/oder boden- bzw. kopfseitig teilweise oder vollständig von den Führungselementen abgeschirmt bzw. geführt wird. Der untere Bereich der Energieführungskette wird hierbei durch das Untertrum und ggf. das auf diesem abgelegte Obertrum gebildet, der obere Bereich durch die höchste Stelle des Umlenkbereichs der Energieführungskette oder durch deren freitragendes Obertrum. Vorzugsweise bilden die Führungselemente, ggf. mehrere hintereinander angeordnete, die durch Zwischenstücke getrennt oder vorzugsweise stirnseitig aneinanderstossen, über die gesamte Länge der Führungsrinne eine geschlossene Seitenwand und/oder boden- bzw. kopfseitige Wand. Die Höhe der Führungselemente übersteigt somit vorzugsweise die gemeinsame Höhe von Ober- und Untertrum.

Die Führungselemente können insbesondere einen im Wesentlichen L-förmigen Querschnitt aufweisen, wobei der Querschnitt der Führungsrinne durch zwei aneinandergrenzende oder lateral beabstandete Führungselemente, die mit ihren bodenseitigen Schenkeln aufeinander zuweisen können, gebildet werden. Vorzugsweise sind die Führungselemente U-förmig ausgebildet, so dass diese die zu führende Energieführungskette sowohl beidseitig als auch bodenseitig führen. Es können jedoch gegebenenfälls auch mehrere in vertikaler und/oder lateraler Richtung voneinander beabstandete seitliche Führungselemente vorgesehen sein.

Die Befestigungsvorsprünge zur Halterung der Führungselemente an den Tragelementen können jeweils an einem der seitlichen Führungselemente, vorzugsweise in dessen oberer Hälfte, und bodenseitig jeweils benachbart den seitlichen Führungselementen vorgesehen sein. Hierdurch können sowohl L- als auch U-Führungselemente an den Tragelementen sicher festgelegt werden.

Die Befestigungsmittel der Führungs- bzw. Abdeckelemente an den Tragelementen sind vorzugsweise höhenversetzt zu den Befestigungsmitteln bzw. -positionen der Tragelemente an der vertikalen Fläche oder einem Halterungsprofil angeordnet.

vorzugsweise stehen die Befestigungsmittel der Tragelemente und/oder der Führungselemente in Richtung aufeinander vor, so dass die Führungselemente mit ihren Außenflächen beabstandet von den Tragelementen an diesen befestigbar sind. Hierdurch werden bis auf die Befestigungsbereiche zwischen den Führungs- und den Tragelemeten schlitz- bzw. spaltförmige Freiräume gebildet, wodurch sowohl Fertigungstoleranzen aufgenommen als auch eine Geräuschdämpfung bei der Fahrbewegung der Energieführungskette erzielt werden kann/können.

Die bodenseitig angeordneten Befestigungsmittel der Führungselemente sind vorzugsweise als sich in Längsrichtung der Führungsrinne erstreckende Leisten ausgebildet, die auf Höhe der Seitenteile der zu verfahrenden Energieführungskette angeordnet sind. Die Quererstreckung der Vorsprünge entspricht hierbei vorzugsweise im Wesentlichen der Breite der Seitenteile der Energieführungskette bzw. deren Auflagefläche auf den Führungselementen, ohne hierauf beschränkt zu sein.

vorzugsweise sind Führungselemente unterschiedlicher Breite und/oder Höhe vorgesehen, die gegeneinander beliebig austauschbar an den gleichen Tragelementen befestigbar sind. Die Befestigungsmittel der unterschiedlichen Führungselemente können somit beispielsweise auf jeweils der gleichen vertikalen Höhe und/oder der gleichen Breite bezogen auf einen Bezugspunkt der Führungsrinne angeordnet sein. Gegebenenfalls können auch an den Tragelementen und/oder den Führungselementen mehrere vertikal und/oder lateral beabstandete Befestigungsbereiche vorgesehen sein, so dass Führungselemente unterschiedlicher Höhe und/oder Breite an ein und derselben vorgegebenen Tragkonstruktion befestigbar sind.

Die Führungselemente können aus einem mehr oder weniger elastisch deformierbaren oder einem unter den Belastungen der Führungsrinne im Wesentlichen starren Material gefertigt sein, insbesondere einem Kunststoffmaterial. Die Tragelemente sind aus einem im Wesentlichen starren Material gefertigt, beispielsweise einem Kunststoffmaterial oder einem Leichtmetall, ohne hierauf beschränkt zu sein.

Nach einer vorteilhaften Weiterbildung umfasst die Führungsrinne Tragelemente und diesen zugeordnete seitliche und/oder oberseitige Abdeckelemente, die vorzugsweise jeweils miteinander korrespondierende einstückig an den Trag- bzw. Führungselementen angeformte Befestigungsmittel aufweisen. Durch die Abdeckelemente wird der obere Bereich der Energieführungskette d.h. das freitragende Obertrum oder der obere Umlenkbereich, seitlich und/oder oberseitig teilweise, vorzugsweise vollständig, abgedeckt und so vor äußeren Einwirkungen geschützt. Die Abdeckung erfolgt vorzugsweise über die gesamte Höhe und/oder Breite des Stranges der Energieführungskette und über die gesamte Länge der Führungsrinne. Die Abdeckelemente haben nur noch eine untergeordnete oder keine Führungsfunktion. Die Tragelemente und/oder die Abdeckelemente können baugleich zu den dem Untertrum der Energieführungskette zugeordneten Tragelementen und Führungselementen ausgeführt sein, so dass sämtliche in dieser Beschreibung gemachen Ausführungen zu diesen entsprechend auch für die dem Obertrum zugeordneten Trag- und Abdeckelemente gelten. Insbesondere gilt dies für die Ausgestaltung der jeweiligen Befestigungsmittel.

Nach einer vorteilhaften Weiterbildung sind die dem unteren und dem oberen Bereich der zu führenden Energieführungskette zugeordneten Tragelemente, vorzugsweise einstückig, gegebenenfalls durch separate Zwischenstücke, miteinander verbunden. Insbesondere kann eine derartige Tragkonstruktion als einstückiges langgestrecktes Profil, beispielsweise als extrudiertes Profil oder Stranggussprofil ausgeführt sein.

Der Abstand der vertikal übereinander angeordneten und mit den seitlichen Abstützschenkeln einander zugewandten Tragelemente ist vorzugsweise derart, dass dieser geringfügig größer als die Höhe des Umlenkbereiches der zu führenden Energieführungskette ist. Hierbei können sowohl die dem oberen als auch dem unteren Energieführungskettenabschnitt zugeordneten Bereiche der Tragelemente mit Befestigungsmitteln zur Festlegung der Führungsrinne an der vertikalen Fläche ausgestattet sein.

Nach einer vorteilhaften Weiterbildung ist ein langgestrecktes und in Längsrichtung der zu führenden Energieführungskette anordnenbares Halterungsprofil vorgesehen, das zur Halterung einer Vielzahl von in Längsrichtung der Energieführungskette angeordneten Tragelementen ausgebildet ist. Das Profil kann, vorzugsweise einstückig an- bzw. eingeformte, Befestigungseinrichtungen zur Befestigung an der vertikalen Fläche umfassen, beipielsweise in Form von Durchgangsöffnungen zur Aufnahme von Befestigungselementen oder in Form von Rastmitteln, ohne hierauf beschränkt zu sein. Das Halterungsprofil kann einstückig mit den Tragelementen verbunden oder lösbar an diesen befestigbar sein. Das Halterungsprofil kann zur Befestigung der dem unteren und/oder dem oberen Bereich der zu führenden Energieführungskette zugeordneten Tragelementen ausgebildet sein und sich somit beispielsweise im wesentlichen über die Höhe der seitlichen Führungselemente bzw. im Wesentlichen über die Gesamthöhe, d. h. einschließlich des Umlenkbereiches bzw. eines freitagenden Obertrums, der Energieführungskette erstrecken. Durch die Befestigung des Halterungsprofils über eine geringe Anzahl von Befestigungspunkten einer vertikalen Fläche kann somit eine Vielzahl von Tragelementen besonders einfach montiert werden oder vertikale Befestigungsflächen überbrückt werden.

Das langgestreckte Halterungsprofil ist vorzugsweise dem Verlauf der Führungsrinne angepasst und kann linear oder ggf. auch gekrümmt ausgeführt sein.

Das Halterungsprofil kann als Hohlprofil mit einem im Wesentlichen rechtwinkeligen Querschnitt ausgebildet sein, das eine oder mehrere sich in Längsrichtung der Führungsrinne erstreckende allseitig geschlossene Hohlkammern aufweisen kann. Gegebenenfalls können die Hohlkammern auch teilweise, beispielsweise über eine sich in Rinnenlängsrichtung erstreckende Seitenfläche offen ausgeführt sein. Die Hohlkammern können stirnseitig offen ausgebildet sein. Insbesondere können an dem Halterungsprofil Befestigungsmittel, beispielsweise in Form von Durchgangsbohrungen zur Aufnahme von Schrauben oder anderen Befestigungselementen vorgesehen sein, die jeweils in vertikaler Höhe zwischen zwei benachbarten Hohlprofilen angeordnet sind. Es versteht sich, dass die Halterungsprofile auch eine andere geeignete Gestalt aufweisen können.

Die Tragelemente können an den Halterungsprofilen an vorbestimmten Stellen oder zumindest bereichsweise in Längs- und/oder Querrichtung der Halterungsprofile verschiebbar und in frei ausgewählten oder einer Mehrzahl von vorbestimmten Stellungen, die beispielsweise in Art eines Rasters angelegt sind, befestigbar sein.

Insbesondere kann das Halterungsprofil Befestigungsbereiche zur Befestigung der dem Untertrum und dem Obertrum der zu führenden Energieführungskette zugeordneten Tragelemente aufweisen. Das Halterungsprofil kann sich hierbei über die gesamte Länge und/oder Höhe der Führungselemente bzw. der gesamten Führungsrinne oder eines Teilbereichs derselben erstrecken. Gegebenenfalls können auch mehrere voneinander beabstandete Halterungsprofile vorgesehen sein, die Mittel zur gegenseitigen Ausrichtung zueinander aufweisen.

Die Tragelemente und/oder die Führungselemente und/oder die Halterungsprofile der Führungsrinne können beliebig ablängbare Profile darstellen, insbesondere können die Befestigungsmittel der oben genannten Bauteile aneinander oder der Bauteile an der vertikalen Fläche derart ausgeführt sein, dass diese bei beliebiger Ablängung oder bei einer Ablängung im Bereich von einer Länge entsprechend einer oder mehrerer Breiten der Führungsrinne eine bestimmungsgemäße Befestigung der Bauteile aneinander oder an der vertikalen Fläche ermöglichen. Hierzu können die Befestigungsmittel beispielsweise als Längsprofile oder als punktförmige Befestigungsmittel vorgesehen sein, wobei der Abstand der Befestigungsmittel zueinander in etwa der Rinnenbreite oder einem kleinen Vielfachen, z. B. dem zwei- bis dreifachen derselben entsprechen. Beispielsweise können die der vertikalen Fläche zugeordneten Befestigungsmittel des Halterungsprofils mittig zwischen den in Längsrichtung der Führungsrinne voneinander beabstandeten Tragelementen angeordnet sein, wobei der Abstand der Tragelemente in Rinnenlängsrichtung der einfachen bis zwei- oder dreifachen Rinnenbreite entspricht, ohne hierauf beschränkt zu sein.

Insbesondere wird erfindungsgemäß ein ablängbares Profil zur Verfügung gestellt, welches vormontierte Tragelemente und Führungselemente oder Tragelemente, Führungselemente und Halterungsprofile umfasst. Die Länge der ablängbaren Profile kann im Bereich von einem bis mehrere Meter, beispielsweise bis sechs Meter betragen. Insbesonder kann erfindungsgemäß ein vorkonfektioniertes System bestehend aus Führungsprofilen und Tragelementen vorgesehen sein, das gleichzeitig eine vormontierte Energieführungskette, insbesondere zugleich mit vormontierten Anschlüssen zur Festlegung der Energieführungskette oder zum Anschluss der von dieser zu führenden Leitungen, Kabel oder dergleich umfasst. Insbesondere kann ein derartiges vorkonfektioniertes System auch ein Halterungsprofil umfassen.

Die Erfindung sei nachfolgend beispielhaft beschrieben und anhand der Figuren beispielhaft erläutert. Es zeigen:
- Fig. 1: Eine Schnittdarstellung einer erfindungsgemäßen Führungsrinne (Figur 1a) und Detailansicht (Figur 1b),
- Fig. 2: eine Schnittdarstellung einer erfindungsgemäßen Führungsrinne mit ober- und unterseitig der zu führenden Energieführungskette angeordneten Führungsrinnenabschnitten,
- Fig. 3: eine Schnittdarstellung einer erfindungsgemäßen Führungsrinne mit U-förmigen Führungselementen,
- Fig. 4: eine Schnittdarstellung einer erfindungsgemäßen Führungsrinne mit einer weiteren Ausführungsform der Tragelemente,
- Fig. 5: eine Schnittdarstellung (Figur 5a) und eine Seitenansicht (Figur 5b) einer erfindungsgemäßen Führungsrinne mit Halterungsprofilen,
- Fig. 6: eine weitere Ausführungsform einer erfindungsgemäßen Führungsrinne mit Halterungsprofil in Schnittdarstellung (Figur 6a) und in Seitenansicht (Figur 6b).

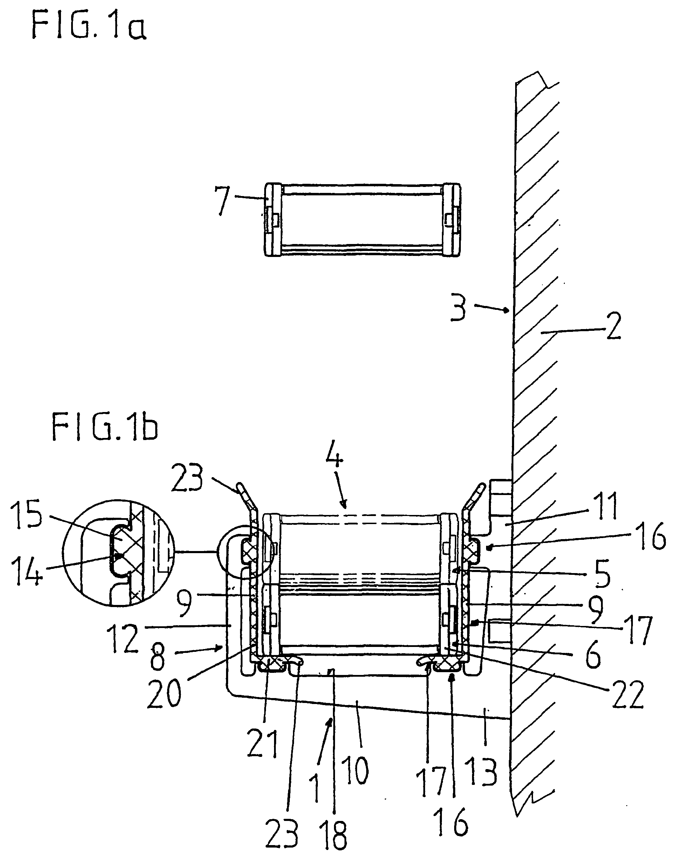

Figur 1 zeigt eine Schnittdarstellung einer erfindungsgemäßen Führungsrinne 1, die an einer Wand 2 mit einer vertikalen Fläche 3 befestigt ist und zur Führung der Energieführungskette 4 dient. Bei der Energieführungskette nach dem Ausführungsbeispiel wird nach einem Umlenkradius das Obertrum 5 aufliegend auf dem Untertrum 6 geführt, wobei die maximale Höhe des Umlenkbereiches durch das Energieführungskettenglied 7 veranschaulicht ist.

Die Führungsrinne 1 weist eine Tragkonstruktion bestehend aus einer Vielzahl hintereinander in Längsrichtung der Tragkonstruktion angeordneten bügelförmigen Tragelementen 8 auf, welche nach dem Ausführungsbeispiel unmittelbar an der vertikälen Wand 2 befestigt sind und sich in Längsrichtung der Führungsrinne erstreckende Führungselemente 9 haltern. Die Tragelemente 8 weisen einen im wesentlichen horizontalen, senkrecht auf der vertikalen Fläche 3 stehenden Schenkel 10 und einen der vertikalen Fläche 3 zugewandten Schenkel 11 auf, der mit Befestigungsmitteln in Form von Durchgangsbohrungen zur Aufnahme von Schrauben oder dergleichen versehen ist. Der Schenkel 11 erstreckt sich nach dem Ausführungsbeispiel in Richtung auf die Führungselemente 9 und dient zugleich der Befestigung sowie der seitlichen Abstützung des der Wand 2 zugewandten seitlichen Führungselementes 9a. Des weiteren ist auf der der vertikalen Fläche 3 abgewandten Seite des Tragelementes 8 ein weiterer gegenüber dem Schenkel 10 abgewinkelter Schenkel 12 vorgesehen, so dass die die Energieführungskette führenden Führungselemente 9b beidseitig von dem Tragelement 8 gehaltert und seitlich abgestützt werden.

Der im Wesentlichen horizontal verlaufende, die Führungsrinne unterstützende Schenkel 10 des Tragelementes weist eine der der Wand 2 zugewandte, sich gegenüber dieser abstützende Verbreiterung 13 auf.

Die Tragelemente 8 bestehen aus einem im wesentlichen starren und biegesteifen Material wie beispielsweise einem Aluminium- oder Kunststoffprofil. Die Führungselemente 9 weisen nach dem Ausführungsbeispiel eine gewisse Elastizität auf, die noch eine ausreichend stabile Führung bzw. Ablage für die Energieführungskette bereitstellt und zugleich elastische Dämpfungseigenschaften aufweist, um eine geräuscharme Bewegung der Energieführungskette innerhalb der Führungsrinne zu ermöglichen.

Das nach dem Ausführungsbeispiel einstückige Tragelement 8 ist zur Halterung der L-förmigen Führungselemente 9 an jeweils einem oder beiden Endbereichen der Schenkel 10, 11, 12 mit Ausnehmungen versehen, die mit korrespondierenden an den Führungselementen 9 angeformten Vorsprüngen wechselwirken und so die Führungselemente 9 kraft- und/oder formschlüssig haltern. Die Vorsprünge 15 sind als sich über die gesamte Längsrichtung der Führungselemente erstreckende Leisten ausgebildet und weisen Hinterschneidungen auf, die nach dem Ausführungsbespiel im Übergangsbereich zu den plattigen Wandbereichen der Führungselemente 9 angeordnet sind, in welche die die Ausnehmungen 14 der Tragelemente 8 begrenzenden Bereiche eingreifen.

Die Ausnehmungen 14 der Tragelemente sind an zum Inneren der Führungsrinne hin vorstehenden Vorsprüngen 16 angeordnet, so dass die bodenseitigen bzw. seitlichen Außenwände 17 der Führungselemente von den zum Inneren der Führungsrinne weisenden Seiten 18 der Schenkel 10, 11, 12 lateral bzw. vertikal beabstandet sind.

Die Führungselemente 9 sind als beliebig ablängbare Profile ausgeführt, die durch ein kontinuierliches Formgebungsverfahren wie beispielweise Extrusions- oder Strangusverfahren hergestellt sein können. Die Führungselemente 9 weisen einstückig miteinander verbundene seitliche und bodenseitige Führungsbereiche 20, 21 auf. Die Befestigungsvorsprünge 15 sind hierbei an den Endbereichen der Führungsbereiche 20, 21 angeformt und dienen zugleich als Versteifungsrippen bzw. Unterstützungen für die auf gleicher Höhe abgelegten Seitenlaschen 22 der Energieführungskette. Die Endabschnitte 23 der Führungselemente sind nach außen abgewinkelt.

Der der Wand 2 zugewandte Schenkel 11 weist eine größere Höhe als der gegenüberliegende Schenkel 12 auf und endet im wesentlichen auf Höhe oder unterhalb der Oberkante der Führungselemente 9. Die Befestigungsmittel des Schenkels 11 sind jeweils ober- und unterhalb der als Vorsprung 15 ausgebildeten Befestigungsmittel der Führungselemente angeordnet.

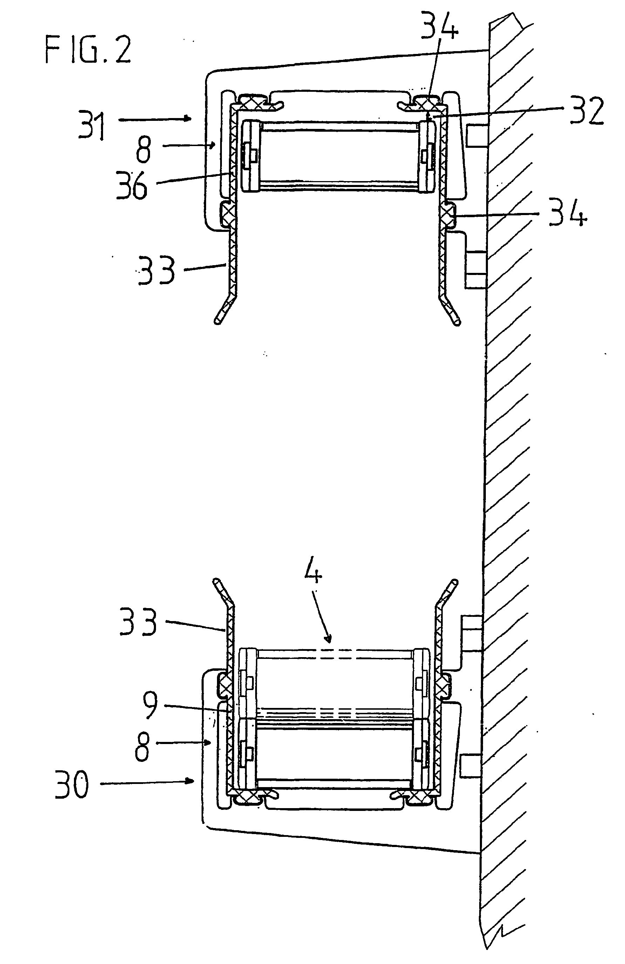

Figur 2 zeigt eine erfindungsgemäße Führungsrinne mit Rinnenabschnitten 30, 31, die unter- bzw. oberhalb der Energieführungskette angeordnet sind. Der untere Rinnenabschnitt 30 dient der Ablage und seitlichen Führung der Energieführungskette 4, der obere Rinnenabschnitt 31 umgibt das Obertrum der Energieführungskette im Umlenkbereich seitlich und oberseitig mit einem gewissen vertikalen Abstand 32. Hierdurch ist zugleich eine seitliche Führung des Obertrums im Umlenkbereich oder bei einem freitragenden Obertrum über die gesamte oder eine Teillänge des Obertrums gegeben. Die Führungsrinnenabschnitte 30 und 31 sind hierbei baugleich ausgeführt.

Der vertikale Abstand der Führungsrinnenabschnitte 30, 31 nach Figur 2, die eine übereinstimmende Länge aufweisen und in Längsrichtung der Führungsrinne kongruent zueinander angeordnet sind, können in der Höhe frei gewählt voneinander beabstandet an der vertikalen Fläche befestigt und so unterschiedlichen Umlenkradien angepasst werden.

Verglichen mit dem Ausführungsbeispiel nach Figur 1 weisen die Führungselemente 9 nach Figur 2 aufgrund der verlängerten Endabschnitte 33 eine größere Höhe auf. Aufgrund der übereinstimmenden Anordnung und Ausgestaltung der Befestigungsvorsprünge 15 und 34 der Führungselemente nach den Figuren 1 und 2 sind diese beliebig gegeneinander austauschbar an identischen Tragelementen 8 befestigbar.

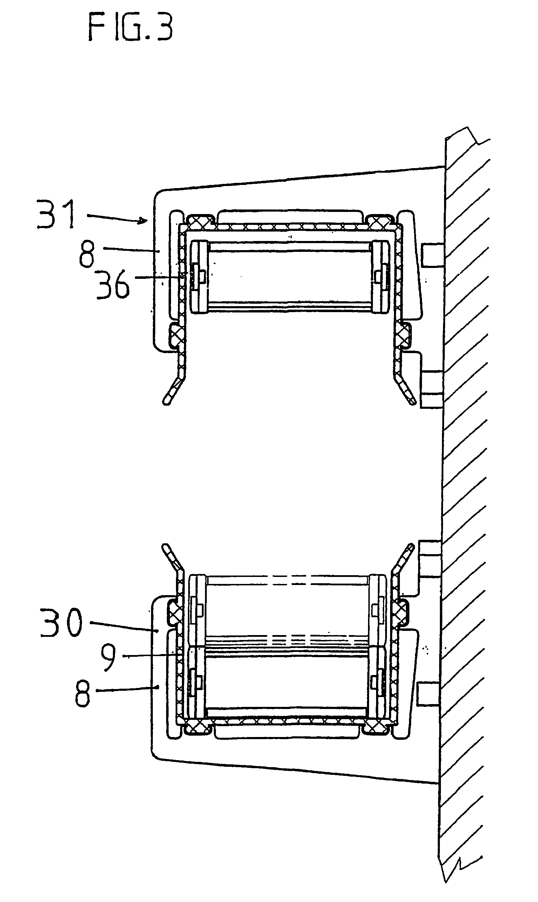

Figur 3 zeigt eine Führungsrinne entsprechend Fig. 2, bei welcher das Führungselement 9 des unteren Führungsrinnenabschnittes 30 U-förmig ausgebildet ist. Im übrigen ist die Führungsrinne, insbesondere bezüglich der Ausgestaltung der Trägerelemente 8 und der Ausgestaltung der Befestigungsmittelvon Führungs- und Tragelementen aneinander, entsprechend den Ausführungsbeispielen der Figuren 1 und 2 ausgeführt. Das Führungselement 9 weist einen über die Länge desselben gleichbleibenden Querschnitt auf.

Durch die Führungselemente 9 können somit Führungsrinnen mit seitlich- und/oder bodenseitig über die Höhe bzw. Breite der Führungsrinne sowie über deren Länge durchgehende Wandbereiche ausgebildet werden. Die unter- bzw. oberhalb der Energieführungskette angeordneten Führungsrinnenabschnitte 30, 31 können somit jeweils der Abschirmung der Energieführungskette vor äußeren Einflüssen oder Fremdstoffen dienen. Die Abdeckelemente 36 des oberen Führungsrinnenabschnittes 31 sind baugleich zu den unteren Führungselementen 9. Zur vollständigen Abschirmung der Energieführungskette nach Figur 3 kann gegebenenfalls ein den vertikalen Abstand der Führungs- und Abdeckelemente 9, 36 der oberen und unteren Führungsrinnenabschnitte 30, 31 überbrückendes Abdeckprofil vorgesehen sein, das an den Führungs- bzw. Abdeckelementen und/oder den Tragelementen befestigbar sein kann.

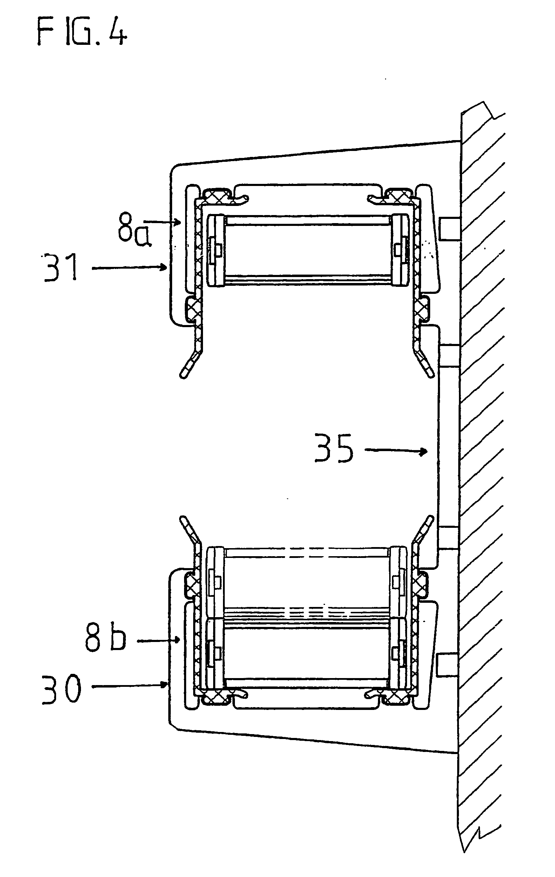

Figur 4 zeigt eine Weiterbildung der Führungsrinne nach den Figuren 1 oder 2, bei welcher im Unterschied zu diesen (bei ansonsten gleicher Ausgestaltung der Führungsrinne) die Tragelementteile 8a, 8b der oberen und unteren Führungsrinnenabschnitte 30, 31 durch den mittleren Abschnitt 35 einstückig miteinander verbunden sind. Gegebenenfalls kann anstelle des mittleren Abschnittes 35 auch ein lösbar an den oberen und unteren Tragelementen 8 befestigbares Verbindungsstück vorgesehen sein. Selbstverständlich können auch hier die Führungs- bzw. Abdeckelemente U-förmig oder anders ausgestaltet sein.

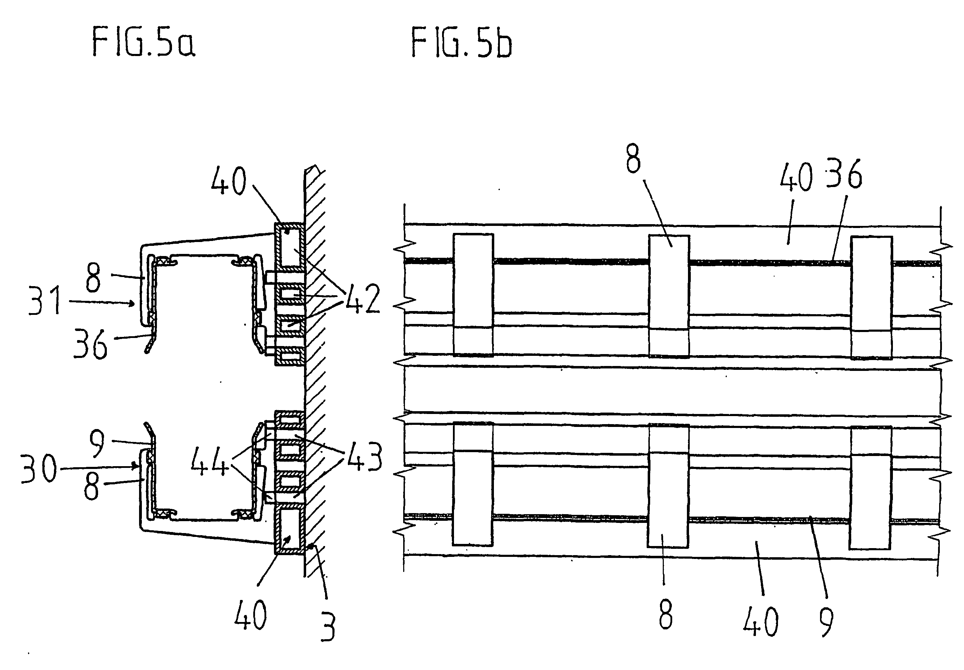

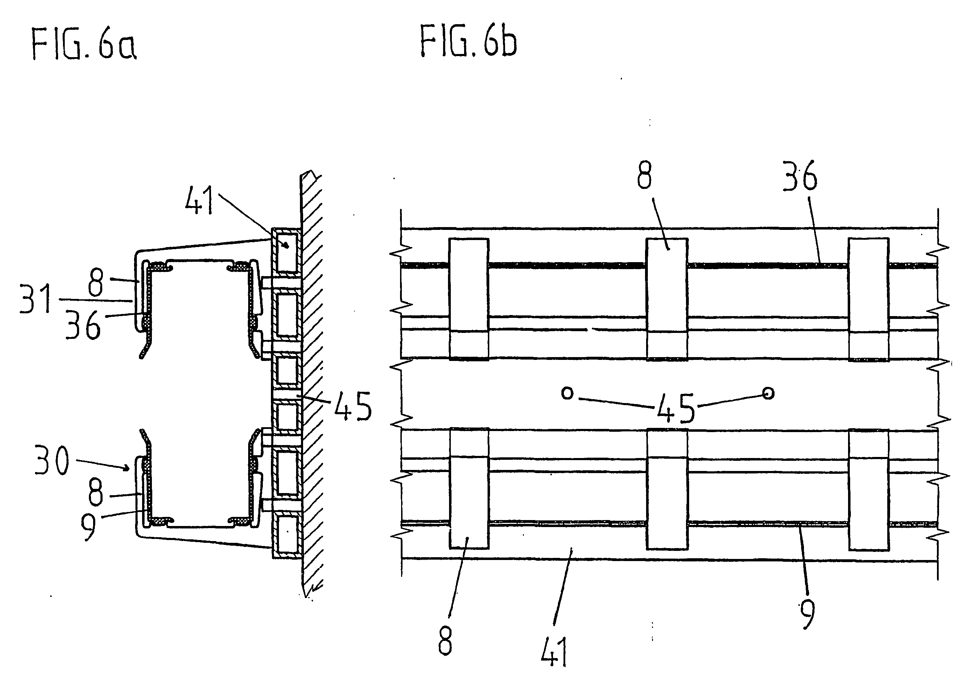

Bei den erfindungsgemäßen Führungsrinnen nach den Figuren 5 und 6, die ansonsten denen der Figuren 1-4 entsprechen, sind zur Befestigung der Tragelemente 8 an der vertikalen Fläche 3 Halterungsprofile 40 bzw. 41 vorgesehen. Nach Figur 5 sind dem oberen und unteren Führungsrinnenabschnitt 30, 31 jeweils separate Halterungsprofile 40 zugeordnet, an welchen jeweils in Längsrichtung der Führungsrinne voneinander beabstandet eine Vielzahl von Tragelementen 8 lösbar oder unlösbar befestigt oder einstückig angeformt sind. Die Halterungsprofile 40, 41 sind als Hohlprofile mit sich in Längsrichtung der Führungsrinnen erstreckenden in allen Umfangsrichtungen geschlossenen Hohlkammern 42 versehen, die stirnseitig offen sind. Zwischen den Hohlkammern sind Durchgangsöffnungen 43 vorgesehen, die senkrecht zu der vertikalen Fläche 3 anordenbar sind und die der Aufnahme von Befestigungselementen wie Schrauben oder dergleichen dienen, um die Tragprofile 8 an der Wand 2 befestigen zu können. Gegebenenfalls können die Durchgangsöffnungen 44 der Tragelemente 8 fluchtend zu den Durchgangsöffnunen der Halterungsprofile anordenbar sein, so dass ein gegebenes Befestigungsmittel gleichzeitig zur Festlegung eines Trägerelementes und eines Halterungsprofils aneinander bzw. an der vertikalen Fläche dienen kann. Selbstverständlich sind auch andere geeignete Befestigungsmittel möglich, beispielsweise können Tragelemente und Halterungsprofile mit einander korrespondierenden und ineinander eingreifenden angeformten Vorsprüngen und Ausnehmungen versehen sein. Ferner können die Mittel zur Befestigung der Tragelemente an den Halterungsprofilen derart ausgeführt sein, dass die Tragelemente bereichsweise oder über die gesamte Länge der Halterungsprofile in Längsrichtung derselben verschiebbar sind. Die Tragelemente können dann an vorbestimmten oder frei ausgewählten Positionen an den Halterungsprofilen festgelegt werden.

Alternativ können auch die Befestigungsmittel zur Festlegung der Halterungsprofile an der vertikalen Fläche derart ausgebildet sein, dass diese an vorbestimmten Stellen oder bereichsweise oder über die gesamte Länge der Halterungsprofile frei wählbar angeordnet werden können.

Das Halterungsprofil nach Figur 6 erstreckt sich im Unterschied zu den nach Figur 5 über die gesamte Höhe der Führungsrinne und verbindet den oberen und unteren Führungsrinnenabschnitt 30, 31 einstückig miteinander. Zur Festlegung an der vertikalen Fläche sind im mittleren Bereich des Halterungsprofils eine Vielzahl in Längsrichtung desselben beabstandete Befestigungsmittel in Form von Durchgangsöffnungen 45 vorgesehen, die der Aufnahme von Schrauben oder dergleichen dienen. Es können selbstverständlich auch andere geeignete Befestigungsmittel vorgesehen sein.

Die Halterungsprofile sowie die Führungselemente sind unter Erhalt deren Funktion beliebig ablängbar. Insbesondere sind die Führungselemente mit an diesen montierten Trägerelementen bzw. die Halterungsprofile mit an diesen montierten Trägerelementen bzw. mit an diesen montierten Träger- und Führungselementen unter Erhalt deren Funktion beliebig ablängbar.

### Bezugzeichenliste

- 1: Führungsrinne
- 2: Wand
- 3: vertikale Fläche
- 4: Energieführungskette
- 5: Obertrum
- 6: Untertrum
- 7: Glied
- 8, 8a, 8b: Tragelement
- 9, 9a, 9b: Führungselement
- 10, 11, 12: Schenkel
- 13: Verbreiterung
- 14: Ausnehmung
- 15: Vorsprung
- 16: Vorsprung
- 17: Außenwand
- 18: Seite
- 20, 21: Führungsbereich
- 22: Seitenlasche
- 23: Endabschnitt
- 30, 31: Führungsrinnenabschnitt
- 32: Abstand
- 33: Endabschnitt
- 34: Vorsprung
- 35: mittlerer Abschnitt
- 36: Abdeckelement
- 40, 41: Halterungsprofil
- 42: Hohlkammer
- 43, 44, 45: Durchgangsöffnung

## Patentansprüche

1. Führungsrinne (1) für Energieführungsketten, wobei die Führungsrinne (1) zueinander parallele seitliche sowie bodenseitige Führungselemente (9, 9a, 9b) zwischen bzw. auf denen die Energieführungskette (4) ablegbar ist, und eine Tragkonstruktion mit Tragelementen (8, 8a, 8b) aufweist, die die Führungselemente (9, 9a, 9b) unterstützen und an denen die Führungselemente (9, 9a, 9b) befestigbar sind, und wobei die Tragelemente (8) mindestens eine sich im Wesentlichen vertikal erstreckende Abstützung für zumindest eines der seitlichen Führungselemente (9) aufweisen, **dadurch gekennzeichnet , dass** die Tragelemente (8) Befestigungseinrichtungen zur Befestigung derselben und damit der Führungsrinne (1) an einer im Wesentlichen vertikalen Fläche aufweisen, dass an den an der vertikalen Fläche befestigbaren Tragelementen (8) und den seitlichen und/oder bodenseitigen Führungselementen (9) korrespondierende Mittel (14, 15) zur Befestigung derselben aneinander einstückig angeformt sind, und dass die Tragelemente (8) einen von dem unterhalb der Führungselemente angeordneten Unterstützungsbereich (10) abgewinkelten Befestigungsbereich (11) zur Festlegung des jeweiligen Tragelementes (8) an der vertikalen Fläche aufweisen.

2. Führungsrinne nach Anspruch 1, **dadurch gekennzeichnet, dass** die Tragkonstruktion eine Mehrzahl von stirnseitig zueinander angeordneten und voneinander in Längsrichtung der Führungsrinne (1) beabstandeten Tragelementen (8) aufweist, die jeweils einem Führungselement (9) zugeordnet sind.

3. Führungsrinne nach Anspruch 1 oder 2, **dadurch gekennzeichnet, dass** die Tragelemente (8) zumindest einen seitlichen Schenkel (11) mit Befestigungsmitteln (44) zur mittel- oder unmittelbaren Befestigung an der vertikalen Fläche (3) aufweisen.

4. Führungsrinne nach Anspruch 3, **dadurch gekennzeichnet, dass** der seitliche Schenkel (11) sich im Wesentlichen senkrecht zur Längsrichtung der Führungsrinne (1) und parallel zur vertikalen Fläche (3) erstreckt.

5. Führungsrinne nach einem der Ansprüche 1 bis 4, **dadurch gekennzeichnet, dass** die Befestigungsmittel der Tragelemente (8) und der Führungselemente (9) aneinander als miteinander korrespondierende Vorsprünge (15) und Ausnehmungen (14) ausgeführt sind.

6. Führungsrinne nach Anspruch 5, **dadurch gekennzeichnet, dass** die Vorsprünge (15) sich in Längsrichtung der Führungselemente (9) erstrecken und leistenartig ausgeführt sind.

7. Führungsrinne nach einem der Ansprüche 1 bis 6, **dadurch gekennzeichnet, dass** die seitlichen und/oder bodenseitigen Führungselemente (9) über die gesamte Länge derselben eine geschlossene Seiten- und/oder Bodenwand der Führungsrinne (1) bilden.

8. Führungsrinne nach einem der Ansprüche 1 bis 7, **dadurch gekennzeichnet, dass** die Befestigungsmittel (14, 15) der Tragelemente (8) und/oder der Führungselemente (9) in Richtung aufeinander vorstehen und dass die Führungselemente (9) mit ihren Außenflächen beabstandet von den Tragelementen (8) an diesen befestigbar sind.

9. Führungsrinne nach einem der Ansprüche 1 bis 8, **dadurch gekennzeichnet, dass** die Führungselemente (9) seitliche und bodenseitige Führungsbereiche zur Führung der Energieführungskette (4) aufweisen.

10. Führungsrinne nach einem der Ansprüche 1 bis 9, **dadurch gekennzeichnet, dass** Führungselemente (9) unterschiedlicher Höhe und/oder Breite vorgesehen sind, die gegeneinander austauschbar an einer vorgegebenen Tragkonstruktion (8, 40, 41)) befestigbar sind.

11. Führungsrinne nach einem der Ansprüche 1 bis 10, **dadurch gekennzeichnet, dass** an der vertikalen Fläche befestigte Tragelemente (8) vorgesehen sind, die oberseitig und/oder seitlich eines oberen Bereichs (7) der zu führenden Energieführungskette (4) angeordnet sind, und das an diesen befestigbare Abdeckelemente (36) vorgesehen sind, die den oberen Bereich (7) der Energieführungskette seitlich und/oder oberseitig zumindest teilweise umgeben.

12. Führungsrinne nach Anspruch 11, **dadurch gekennzeichnet, dass** die ober- und unterhalb der zu führenden Energieführungskette angeordneten Tragelemente (8, 8a) einstückig miteinander verbunden sind.

13. Führungsrinne nach einem der Ansprüche 1 bis 12, **dadurch gekennzeichnet, dass** ein langgestrecktes und sich in Längsrichtung der Führungsrinne erstreckendes Halterungsprofil (40, 41) vorgesehen ist, das zur Halterung einer Vielzahl von in Längsrichtung der Führungsrinne (1) angeordneten Tragelementen (8) ausgebildet ist.

14. Führungsrinne nach Anspruch 13, **dadurch gekennzeichnet, dass** das Halterungsprofil Befestigungseinrichtungen (45) zur Befestigung an der vertikalen Fläche aufweist.

15. Führungsrinne nach Anspruch 13 oder 14, **dadurch gekennzeichnet, dass** die Tragelemente (8) an dem Halterungsprofil (40, 41) zumindest bereichsweise in Längsrichtung und/oder Querrichtung desselben verschiebbar und an dem Halterungsprofil (40, 41) befestigbar sind.

16. Führungsrinne nach einem der Ansprüche 13 bis 15, **dadurch gekennzeichnet, dass** das Halterungsprofil (41) Befestigungsbereiche zur Befestigung von ober- und unterhalb der zu führenden Energieführungskette angeordneten Tragelementen (8, 8a) aufweist.

17. Führungsrinne nach einem der Ansprüche 13 bis 16, **dadurch gekennzeichnet, dass** das Halterungsprofil (41) als Hohlprofil ausgeführt ist.

18. Führungsrinne nach einem der Ansprüche 1 bis 17, **dadurch gekennzeichnet, dass** das Tragelement (8) und/oder das Führungselement (9) und/oder das Halterungsprofil (40, 41) ein beliebig ablängbares Profil darstellt.

19. Führungsrinne nach einem der Ansprüche 1 bis 18, **dadurch gekennzeichnet, dass** eine zumindest aus Tragelementen (8) und Führungselementen (9) und wahlweise Halterungsprofilen (40, 41) bestehende vormontiertes Führungsrinne (1) vorsehen ist.

20. Führungsrinne nach Anspruch 19, **dadurch gekennzeichnet, dass** die vormontierte Führungsrinne (1) eine vormontierte Energieführungskette (4) umfasst.

## Claims

1. Guide trough (1) for energy guiding chains, where the guide trough (1) has parallel lateral guide elements and bottom guide elements (9, 9a, 9b), between which or on which the energy guiding chain (4) can be arranged, and where a support structure with support elements (8, 8a, 8b) is provided which supports the guide elements (9, 9a, 9b) and on which the guide elements (9, 9a, 9b) are mounted, and where the support elements (8) have at least one, essentially vertical rest for at least one of the lateral guide elements (9), **characterized in that** the support elements (8) are provided with mounting devices for mounting the support elements and thereby the guide trough (1) on an essentially vertical surface, that the support elements (8) which can be mounted on the vertical surface and the lateral and/or bottom guide elements (9) have corresponding, integrally moulded means (14, 15) for mounting on one another and that the support elements (8) are provided with a mounting area (11) which is at an angle to the support area (10) located underneath the guide elements to fix the corresponding support element (8) to the vertical surface.

2. A guide trough according to claim 1, **characterized in that** the support structure has multiple support elements, which are each associated with one guide element (9), the support elements are arranged to face one another, and separated in the longitudinal direction of the guide trough.

3. A guide trough according to one of claims 1 or 2, **characterized in that** the support elements (8) have at least one lateral leg (11), which is provided with mounting means (44) for directly or indirectly mounting the respective support element on the vertical surface.

4. A guide trough according to claim 3, **characterized in that** the lateral leg (11) extends essentially perpendicular to the longitudinal direction of the guide trough (1) and parallel to the vertical surface (3).

5. A guide trough according to one of claims 1 to 4, **characterized in that** the mounting means for connecting the support elements (8) and the guide elements (9) to each other are designed as corresponding projections (15) and recesses (14).

6. A guide trough according to claim 5, **characterized in** t**hat** the projections (15) extend in the longitudinal direction of the guide elements (9) and are of strip-like design.

7. A guide trough according to one of claims 1 to 6, **characterized in that** the side and/or bottom guide elements form a continuous wall over its entire length, being a side wall and/or bottom wall of the guide trough (1).

8. A guide trough according to one of claims 1 to 7, **characterized in that** the mounting means (14, 15) of the support elements (8) and/or the guide elements (9) project towards one another, and that the outside surfaces of the guide elements (9) adjacent to the mounting means can be mounted on the support elements (8) at a distance from them.

9. A guide trough according to one of claims 1 to 8, **characterized in that** the guide elements (9) have lateral and bottom guide areas for guiding the energy guiding chain (4).

10. A guide trough according to one of claims 1 to 9, **characterized in that** guide elements (9) of different height and/or width are provided being interchangeably mounted on a given support structure (8, 40, 41).

11. A guide trough according to one of claims 1 to 10, **characterized in that** support elements (8) that are mounted on the vertical surface are provided, which are arranged on the top and/or side of an upper region (7) of the energy guiding chain (4) to be guided, and that cover elements (36) that can be mounted on them are provided, which at least partially surround the side and/or top of the upper region (7) of the energy guiding chain.

12. A guide trough according to claim 11, **characterized in that** the support elements (8, 8a) positioned above and below the energy guiding chain to be guided are connected as a single piece.

13. A guide trough according to one of claims 1 to 12, **characterized in that** a long mounting profile (40, 41) extending in the longitudinal direction of the guide trough is provided, which is designed for mounting a number of support elements arranged in the longitudinal direction of the guide trough (1).

14. A guide trough according to claim 13, **characterized in that** the mounting profile has mounting devices (45) for mounting on the vertical surface.

15. A guide trough according to claim 13 or 14, **characterized in that** the support elements (8) can be shifted on the mounting profile (40, 41) at least in sections and at least in a longitudinal direction and/or a transverse direction of the mounting profile, and that they can be mounted on the mounting profile (40, 41).

16. A guide trough according to one of claims 13 to 15, **characterized in that** the mounting profile (41) has mounting areas for mounting support elements (8, 8a) arranged above and below the energy guiding chain to be guided.

17. A guide trough according to one of claims 13 to 16, **characterized in that** the mounting profile (41) is designed as a hollow profile.

18. A guide trough according to one of claims 1 to 17, **characterized in that** the support element (8) and/or the guide element (9) and/or the mounting element (40, 41) is a profile that can be cut to length as required.

19. A guide trough according to one of claims 1 to 18, **characterized in that** a guide trough (1) consisting of at least support elements (8) and guide elements (9) and, optionally, mounting profiles (40, 41), is pre-assembled.

20. A guide trough according to claim 19, **characterized in that** the pre-assembled guide trough (1) includes a pre-assembled energy guiding chain (4).

## Revendications

1. Rigole de guidage (1) pour des chaînes de guidage d'énergie, sachant que la rigole de guidage (1) présente des éléments de guidage (9, 9a, 9b) latéraux, parallèles entre eux, et de fond entre ou sur lesquels la chaîne de guidage d'énergie (4) peut être posée, et une construction porteuse munie d'éléments porteurs (8, 8a, 8b) qui supportent les éléments de guidage (9, 9a, 9b) et au niveau desquels les éléments de guidage (9, 9a, 9b) peuvent être fixés, et sachant que les éléments porteurs (8) présentent au moins un appui s'étendant essentiellement verticalement pour au moins un des éléments de guidage latéraux (9), **caractérisée en ce que** les éléments porteurs (8) présentent des dispositifs de fixation pour fixer lesdits éléments, et ainsi, la rigole de guidage (1) au niveau d'une surface essentiellement verticale, **en ce que** des moyens (14, 15) correspondants sont formés d'une seule pièce au niveau des éléments porteurs (8) qui peuvent être fixés au niveau de la surface verticale et des éléments de guidage (9) de fond et/ou latéraux pour fixer lesdits éléments, et **en ce que** les éléments porteurs (8) présentent une zone de fixation (11) décalée de la zone de soutien (10) disposée en dessous des éléments de guidage pour fixation de l'élément porteur (8) respectif au niveau de la surface verticale.

2. Rigole de guidage selon la revendication 1, **caractérisée en ce que** la construction porteuse comporte une multitude d'éléments porteurs (8) espacés les uns des autres dans le sens longitudinal de la rigole de guidage (1), disposés côté face les uns par rapport aux autres et associés respectivement à un élément de guidage (9).

3. Rigole de guidage selon la revendication 1 ou 2, **caractérisée en ce que** les éléments porteurs (8) présentent au moins un montant latéral (11) avec des moyens de fixation (44) pour une fixation centrale ou directe au niveau de la surface verticale (3).

4. Rigole de guidage selon la revendication 3, **caractérisée en ce que** le montant latéral (11) s'étend essentiellement perpendiculairement au sens longitudinal de la rigole de guidage (1) et parallèlement à la surface verticale (3).

5. Rigole de guidage selon l'une quelconque des revendications 1 à 4, **caractérisée en ce que** les moyens de fixation des éléments porteurs (8) et des éléments de guidage (9) sont réalisés en tant qu'évidement (14) et saillie (15) correspondant l'un avec l'autre.

6. Rigole de guidage selon la revendication 5, **caractérisée en ce que** les saillies (15) s'étendent dans le sens longitudinal des éléments de guidage (9) et sont de type listel.

7. Rigole de guidage selon l'une quelconque des revendications 1 à 6, **caractérisée en ce que** les éléments de guidage (9) latéraux et/ou de fond forment sur toute leur longueur une paroi de fond et/ou latérale fermée de la rigole de guidage (1).

8. Rigole de guidage selon l'une quelconque des revendications 1 à 7, **caractérisée en ce que** les moyens de fixation (14, 15) des éléments porteurs (8) et/ou des éléments de guidage (9) font saillie les uns sur les autres et **en ce que** les éléments de guidage (9) peuvent être fixés, avec leur face extérieure, espacés des éléments porteurs (8), au niveau de ceux-ci.

9. Rigole de guidage selon l'une quelconque des revendications 1 à 8, **caractérisée en ce que** les éléments de guidage (9) présentent des zones de guidage latérales et de fond pour guider la chaîne de guidage d'énergie (4).

10. Rigole de guidage selon l'une quelconque des revendications 1 à 9, **caractérisée en ce que** sont prévus des éléments de guidage (9) de hauteur et/ou de largeur différente(s) qui peuvent être fixés de façon interchangeable au niveau d'une construction porteuse (8, 40, 41) prédéfinie.

11. Rigole de guidage selon l'une quelconque des revendications 1 à 10, **caractérisée en ce que** sont prévus des éléments porteurs (8) fixés au niveau de la surface verticale, disposés en partie supérieure et/ou sur le côté d'une zone supérieure (7) de la chaîne de guidage d'énergie (4) à guider et **en ce que** sont prévus des éléments couvrants (36) pouvant être fixés au niveau de celle-ci et enveloppant, sur le côté et/ou en partie supérieure, au moins en partie, la zone supérieure (7) de la chaîne de guidage d'énergie.

12. Rigole de guidage selon la revendication 11, **caractérisée en ce que** les éléments porteurs (8, 8a) disposés au-dessus et en dessous de la chaîne de guidage d'énergie à guider sont liés ensemble en une seule pièce.

13. Rigole de guidage selon l'une quelconque des revendications 1 à 12, **caractérisée en ce qu'**il est prévu un profilé support (40, 41) allongé, s'étendant dans le sens longitudinal de la rigole de guidage et réalisé pour supporter un grand nombre d'éléments porteurs (8) disposés dans le sens longitudinal de la rigole de guidage (1).

14. Rigole de guidage selon la revendication 13, **caractérisée en ce que** le profilé support présente des dispositifs de fixation (45) pour fixation au niveau de la surface verticale.

15. Rigole de guidage selon la revendication 13 ou 14, **caractérisée en ce que** les éléments porteurs (8) peuvent être déplacés au niveau du profilé support (40, 41) au moins par zone dans le sens longitudinal et/ou transversalement à celui-ci et être fixés au niveau du profilé support (40, 41).

16. Rigole de guidage selon l'une quelconque des revendications 13 à 15, **caractérisée en ce que** le profilé support (41) présente des zones de fixation pour fixer des éléments porteurs (8, 8a) disposés au-dessus et en dessous de la chaîne de guidage d'énergie à guider.

17. Rigole de guidage selon l'une quelconque des revendications 13 à 16, **caractérisée en ce que** le profilé support (41) est réalisé en tant que profilé creux.

18. Rigole de guidage selon l'une quelconque des revendications 1 à 17, **caractérisée en ce que** l'élément porteur (8) et/ou l'élément de guidage (9) et/ou le profilé support (40, 41) représente(nt) un profilé pouvant être mis à longueur au choix.

19. Rigole de guidage selon l'une quelconque des revendications 1 à 18, **caractérisée en ce qu'**il est prévu une rigole de guidage (1) prémontée et composée au moins d'éléments porteurs (8) et d'éléments de guidage (9) et facultativement, de profilés supports (40, 41).

20. Rigole de guidage selon la revendication 19, **caractérisée en ce que** la rigole de guidage (1) prémontée comprend une chaîne de guidage d'énergie (4) prémontée.
